# EUROPEAN PATENT APPLICATION

(11) **EP 2 073 126 A1**
(43) Date of publication of application: **24.06.2009**
(21) Application number: 08170913.1
(22) Date of filing: 08.12.2008
(51) Int. Cl.: G06F 12/08

(54) **Cache memory system and cache memory control method**

(30) Priority: 19.12.2007 JP 2007327477
(71) Applicant: Nec Corporation, Tokyo 108-8001 (JP)
(72) Inventor: Kanoh, Yasushi, Tokyo 108-8001 (JP)
(74) Representative: Betten & Resch

(57) **Abstract**

A cache memory system, which is individually connected to each of a plurality of arithmetic units that access a shared memory to carry out parallel processing, includes: a data array that has a plurality of blocks that are composed of a plurality of words; a storage unit that, with respect to a block, which stores data in at least one of the words, among the plurality of blocks, stores an address group of the shared memory that is placed in correspondence with that block; a write unit that, when an address from said arithmetic unit is not in the storage unit at the time of writing of data from the arithmetic unit, allocates any of the plurality of blocks as a block for writing, places any word in that block for writing in correspondence with the address, and writes the data from the arithmetic unit to the word; a word state storage unit that stores word state information for specifying a word, into which the data from the arithmetic unit have been written, in association with an address that has been placed in correspondence with the word; and a data transfer unit that, when the block for writing is replaced with a different block, refers to the word state storage unit, specifies one or a plurality of words, into which the data have been written, within the block for writing, and performs write-back of data in the one or plurality of specified words to a corresponding block in the shared memory.

## Description

This application is based upon and claims the benefit of priority from Japanese patent application No. 2007-327477, filed on December 19, 2007, the disclosure of which is incorporated herein in its entirety by reference.

### Background of the Invention

### 1. Field of the Invention:

The present invention relates to a cache memory system and a cache memory control method in a parallel computer system having a shared memory that can be accessed by a plurality of CPUs (Central Processing Units), and more particularly to a cache memory system and a cache memory control method that can avoid pointless memory access due to false sharing when carrying out parallel processing in a plurality of CPUs.

### 2. Description of the Related Art:

Data processing technology that uses a cache memory is known. JP-A-09-251424 discloses a cache memory system that performs write back of data in a cache memory to a main memory unit on a block basis in a single processor system.

JP-A-2000-267935 discloses a cache memory system used in parallel computers in which a plurality of processors are connected to a single shared memory.

FIG. 1 is a block diagram showing the parallel computer described in JP-A-2000-267935.

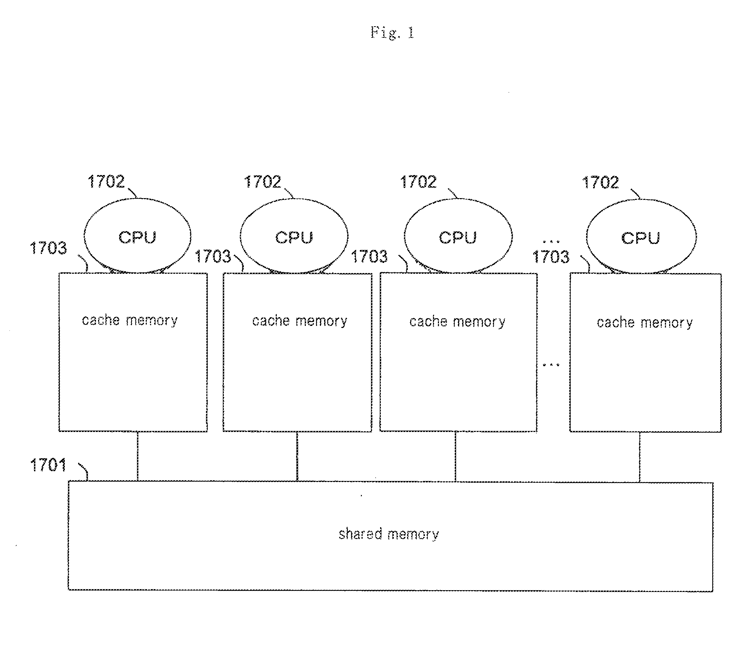

In FIG. 1, a single shared memory 1701 is connected to a plurality of CPUs 1702 in a parallel computer. Each CPU 1702 has cache memory 1703, and each computer 1702 can use cache memory 1703 to store data in shared memory 1701.

In a parallel computer of this type, high performance can be achieved because a plurality of CPUs carry out parallel processing of one program.

For example, in FIG. 14 of Non-Patent Document 1 ("NEC Technical Journal," No. 45, Issue 2, NEC Culture Center, February 28, 1992, p. 64), a method is disclosed in which a plurality of CPUs carry out parallel processing of the outermost DO loop of DO loops with three tiers.

Non-Patent Document 1 discloses the technique of attaining higher speeds by vectorizing the portion of the two inner-side DO loops. Further, regarding the portion of the two inner-side DO loops, higher speed can be achieved by using SIMD (Single Instruction Multiple Data) instructions of a scalar processor.

In the example described in Non-Patent Document 1, a process is shown in which the product of three-dimensional arrays B and C is stored in three-dimensional array A. In addition, when a plurality of CPUs carries out parallel processing of a DO loop realized by outermost K, values are written to each of the elements of array A (I, J, K) by only one CPU determined by the third index K of the array.

On the other hand, FIG. 7. 10 of non-Patent Document 2 (David Patterson, John Hennessy, Computer Architecture: A Quantitative Approach, Nikkei BP Publishing Center, December 25, 1992, pp. 364-365) describes the arrangement of each element when a multi-dimensional array is stored in a one-dimensional memory.

The arrangement of elements of an array in a memory differs depending on the programming language. In FORTRAN, a column-priority arrangement is adopted in which elements of the same column are continuous in memory. In cases other than FORTRAN, a row-priority arrangement is adopted in which elements of the same row are continuous in memory.

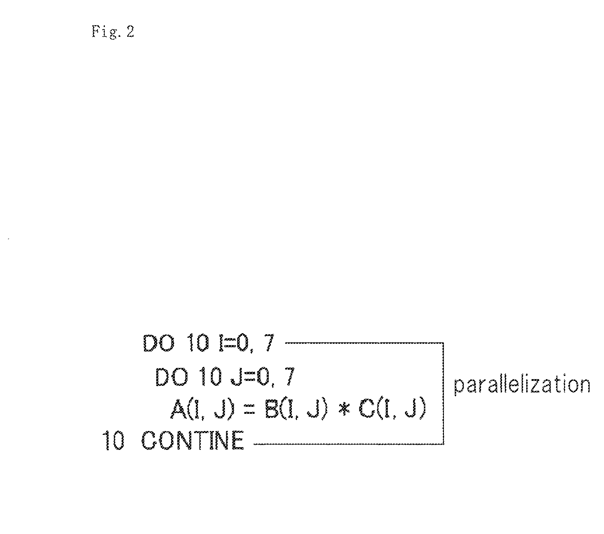

A case is here considered in which eight CPUs carry out the parallel processing of the outer loop of a FORTRAN program shown in FIG. 2.

In the parallel computer described in FIG. 1, each CPU 1702 uses cache memory 1703 to store content in shared memory 1701. A higher speed of data access is therefore realized to achieve higher performance.

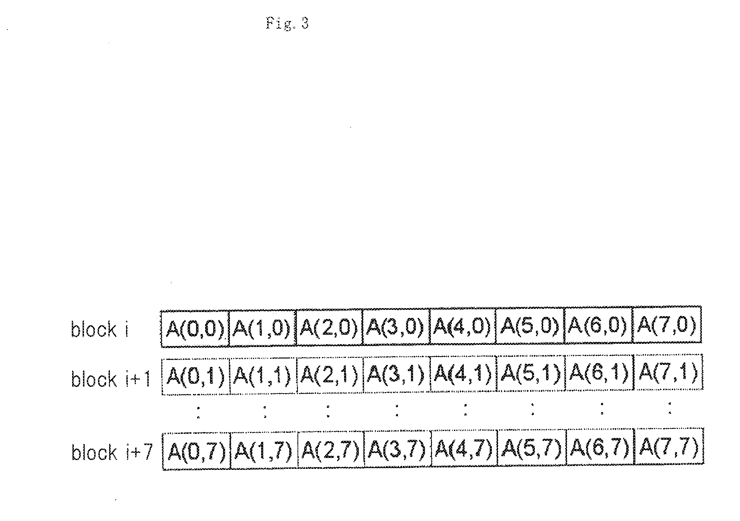

FIG. 3 shows the arrangement of elements in the cache memory when the block size of the cache memory is 64 bytes and array A begins from the boundary of 64 bytes.

Because FORTRAN adopts a column-priority arrangement, the elements in the same columns of array A are continuous. As a result, A(0, k)-A(7, k) (where k= 0-7) are arranged in each word of the same cache block.

Each CPU separately updates A(i, 0)-A(i, 7) (where i=0-7). As a result, in one cache block, data are written every one word by eight CPUs.

As described in non-Patent Document 3 (John L. Hennessy, David A. Patterson, Computer Architecture: A Quantitative Approach, Morgan Kaufmann Publishers, Inc., 1996, pp. 669-670), when a plurality of CPUs write data into words that differ from each other in one cache block, a problem referred to as "false sharing" occurs in cache memory, which carries out invalidation-based coherence control, with the result that memory access performance is impaired. JP-A-2000-267935 discloses a method for avoiding the drop in the cache-hit rate caused by false sharing.

In this method, cache blocks are divided into sub-blocks and a valid bit is affixed to each sub-block. When a certain CPU writes data to a particular sub-block, a request to invalidate the sub-block, to which the data were written, is supplied to other CPUs, the CPUs invalidate the sub-block, and the other sub-blocks in the block are kept in the cache memory as valid. In this way, decrease in the cache-hit rate caused by false sharing is avoided.

In the method described in JP-A-2000-267935, the following problem occurs in parallel processing in which eight CPUs write data to sub-blocks that differ from each other in a block in the cache memory as in the example shown in FIG. 2. The method described in JP-A-2000-267935 is carried out in a write-back cache memory. As a result, when another CPU writes data to a particular block, this block is read from a shared memory, and then the data is written to the cache memory.

Thus, in the method disclosed in JP-A-2000-267935, when parallel processing is carried out in which eight CPUs write data to sub-blocks that differ from each other in a block in the cache memory, a complex write-back process and reading of block data from a shared memory are carried out seven times for each block during writing of data by CPUs other than the CPU that first wrote the data.

In addition, as shown in array A of FIG. 2, when the entire block data is rewritten by a loop and the result of this process is not immediately referred to within the loop, an invalidation process need not be performed to maintain coherence for each writing of data to array A. In this case, coherence control becomes overhead.

In a case such as the example shown in FIG. 2, each CPU should perform write-back of the data written into the cache memory to the shared memory when a loop ends.

Explanation next regards a drawback of the invalidation-based coherence control write-back cache memory.

This drawback includes performance of invalidation and the write-back process, which are performed by CPUs other than the CPU that performed writing, and the reading of block data from the shared memory, which is performed by the CPU that performed writing, for each new case of writing data when a plurality of CPUs perform writing of data to one cache block.

In particular, when a plurality of CPUs perform parallel processing of an outermost loop such as shown in FIG. 2, both the write-back resulting from coherence control and the memory access resulting from reading of block data from the shared memory result in a large amount of overhead.

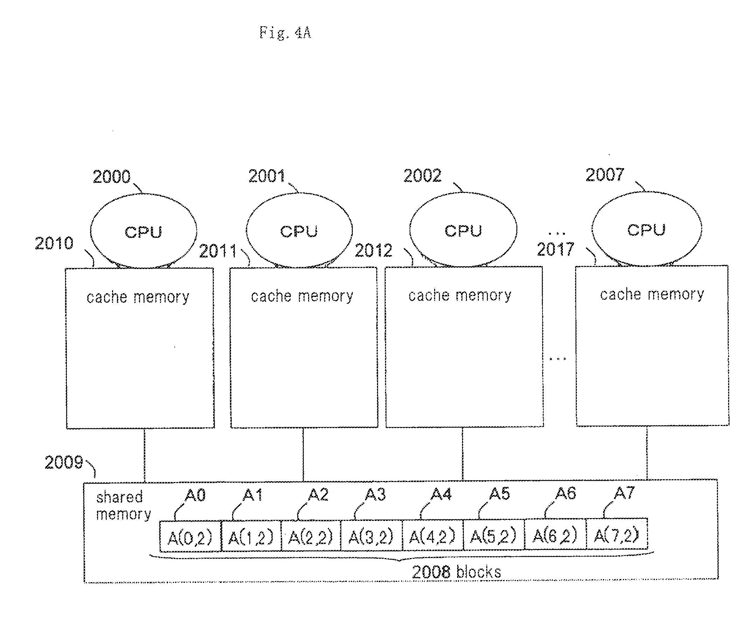

FIGs. 4A-4H are explanatory views showing processing when CPUs 2000-2007 carry out writing of data in order in each of words A0-A7 within the same block 2008.

Block 2008 is stored in shared memory 2009. CPUs 2000-2007 have cache memories 2010-2017. Data A(0, 2)-A(7, 2) are written into each of words A0-A7.

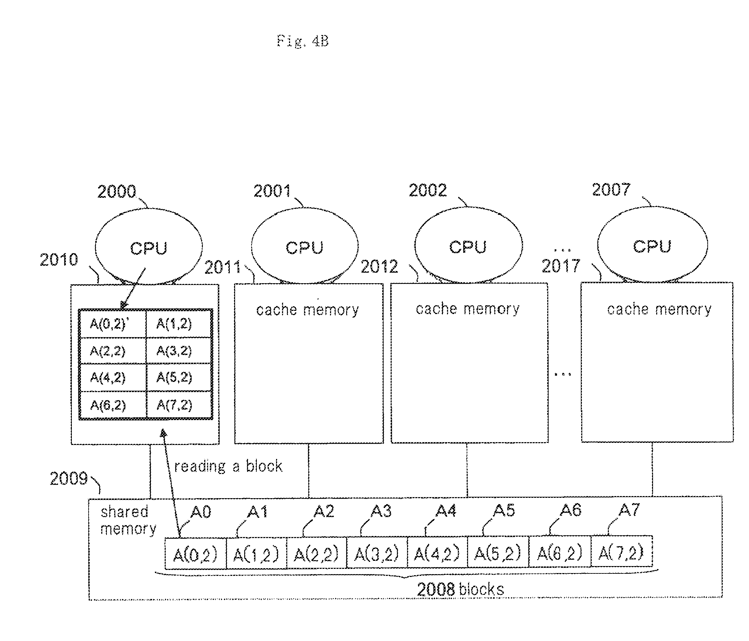

FIG. 4A is an explanatory view showing the state before entering the loop. CPU 2000 first, in order to write processing result A (0, 2)' into word A0 (A(0, 2)) within block 2008, reads data A(0, 2)-A(7, 2) of block 2008 from shared memory 2009 and writes the data to cache memory 2010. CPU 2000 then writes processing result A(0, 2)' to word A0 of block 2008 in cache memory 2010 (see FIG. 4B).

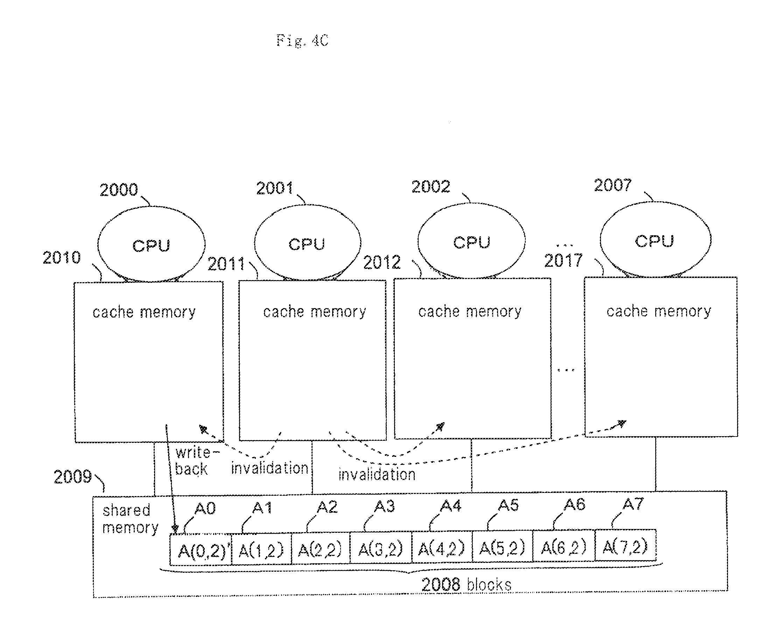

CPU 2001 next, in order to write the processing result A(1, 2)' to word A1 (A(1, 2)) in block 2008, issues an invalidate request to cause write-back of the data of block 2008 from cache memory 2010 of CPU 2000 to shared memory 2009 (see FIG. 4C).

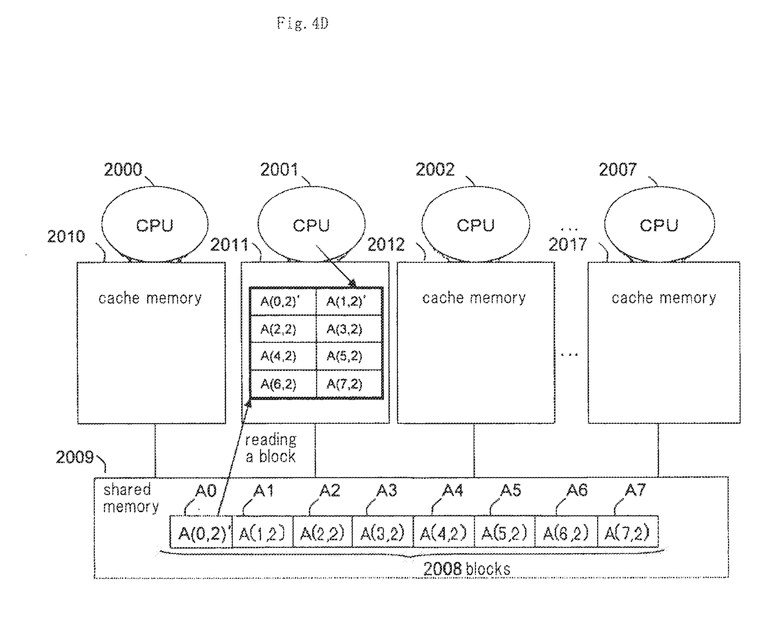

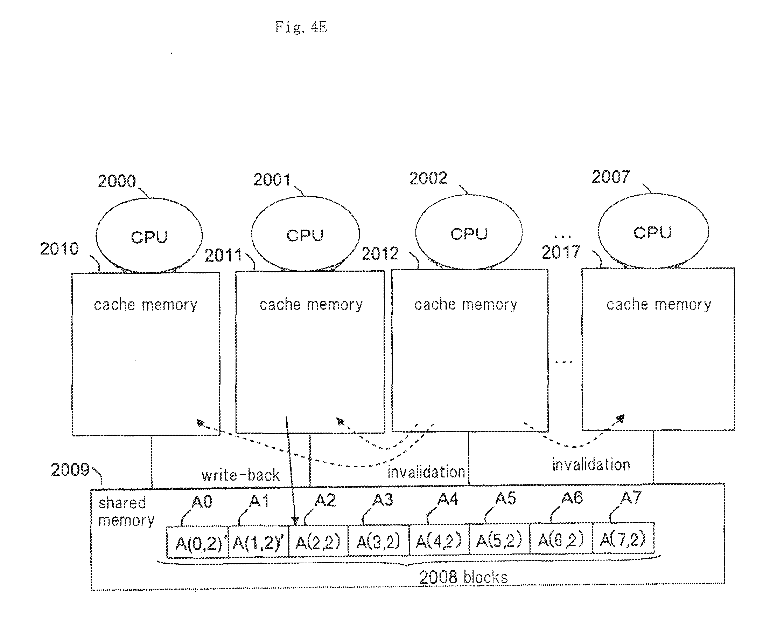

CPU 2001 next reads the data of block 2008 from shared memory 2009 to write the data to cache memory 2011. CPU 2001 then writes processing result A(1, 2)" into word A1 of block 2008 in cache memory 2011 (see FIG. 4D). CPU 2002 then, in order to write processing result A(2, 2)' to word A2(A(2, 2)) in block 2008, issues the invalidate request to cause the write-back of the data of block 2008 from cache memory 2011 of CPU 2001 to shared memory 2009 (see FIG. 4E).

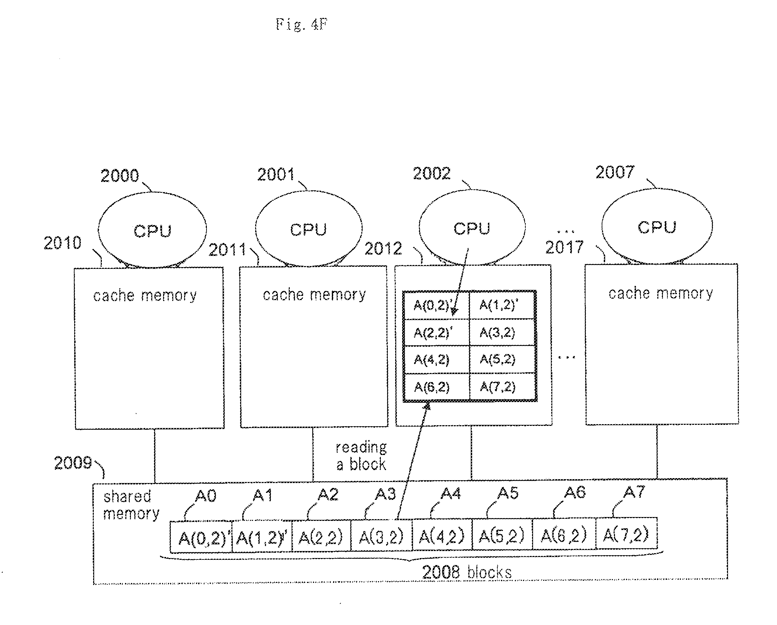

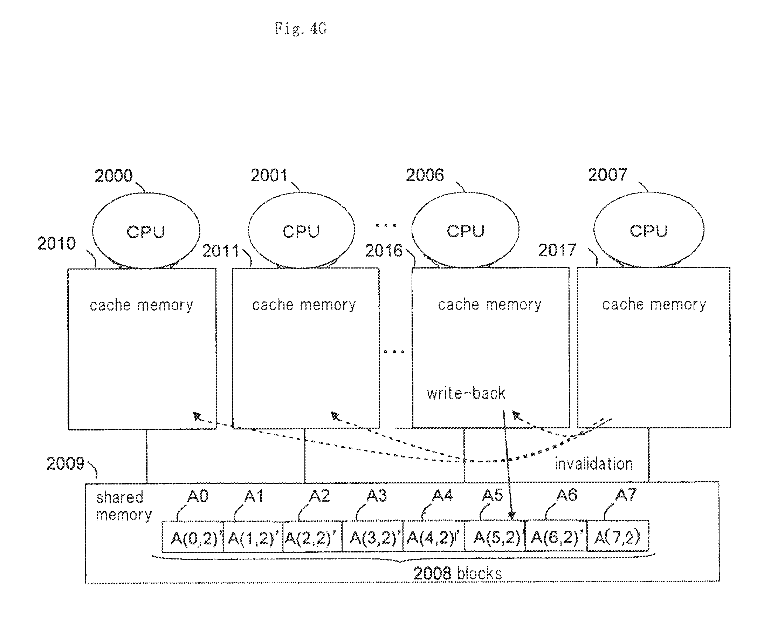

Next, CPU 2002 reads the data of block 2008 from shared memory 2009 and writes the data to cache memory 2012. CPU 2002 then writes the processing result A(2, 2)' to word A2 of block 2008 in cache memory 2012 (see FIG. 4F). CPU 2003-CPU 2006 subsequently carry out the same process, and CPU 2007 finally, in order to write the processing result A(7, 2)' to word A7(A(7, 2)) within block 2008, issues an invalidate request to cause write-back of the data of block 2008 from cache memory 2016 of CPU 2006 to shared memory 2009 (see FIG. 4G).

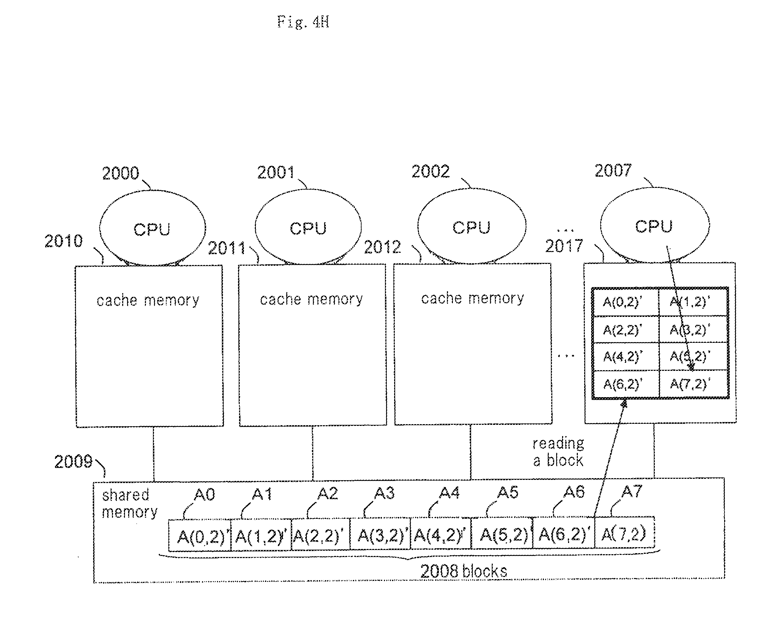

CPU 2007 next reads the data of block 2008 from shared memory 2009 to write the data to cache memory 2017. CPU 2007 then writes the processing result A(7, 2)' to word A7 of block 2008 in cache memory 2017 (see FIG. 4H). Thus, write-back from a cache memory to the shared memory and reading of the data in this block from the shared memory occur for blocks into which data are written for each writing operation.

This type of memory access is carried out for coherence control to allow reference to the latest updated values, but in a loop such as shown in FIG. 2, new values that have been updated are not referenced during execution of the loop.

Accordingly, when performing parallel processing of a loop such as shown in FIG. 2, coherence control that causes frequent memory access results in overhead that leads to a drop in performance.

### Summary of the Invention:

An exemplary object of the present invention is to provide a cache memory system and a cache memory control method that can resolve the above-described problems.

A cache memory system according to an exemplary aspect of the invention is a cache memory system, which is individually connected to each of a plurality of arithmetic units that access a shared memory to carry out parallel processing, the cache memory system including: a data array that has a plurality of blocks that are composed of a plurality of words; a storage unit that, regarding a block, which stores data in at least one of the words, among the plurality of blocks, stores an address group of the shared memory that is placed in correspondence with that block; a write unit that, when an address from said arithmetic unit is not in the storage unit at the time of writing of data from the arithmetic unit, allocates any of the plurality of blocks as a block for writing, places any word in that block for writing in correspondence with the address, and writes the data from the arithmetic unit to the word; a word state storage unit that stores word state information for specifying a word, into which the data from the arithmetic unit have been written, in association with an address that has been placed in correspondence with the word; and a data transfer unit that, when the block for writing is replaced with a different block, refers to the word state storage unit, specifies one or a plurality of words, into which the data have been written, within the block for writing, and performs write-back of data in the one or plurality of specified words to a corresponding block in the shared memory.

A cache memory control method according to an exemplary aspect of the invention is a cache memory control method, which is carried out by a cache memory system that is individually connected to each of a plurality of arithmetic units that access a shared memory to carry out parallel processing, the cache memory system including a data array having a plurality of blocks composed of a plurality of words; the cache memory control method including: storing, with respect to a block, which stores data in at least one of the words, among the plurality of blocks, an address group of the shared memory, which has been placed in correspondence with that block, in a storage unit; when an address from said arithmetic unit is not within the storage unit at the time of performing writing of data from the arithmetic unit, allocating any of the plurality of blocks as a block for writing, placing any of the words in the block for writing in correspondence with the address, and writing the data from the arithmetic unit to that word; storing word state information for specifying a word, to which the data from the arithmetic unit have been written, in association with an address, which has been placed in correspondence with the word, in a word state storage unit; carrying out data transfer wherein, when the block for writing is replaced with a different block, referring to the word state storage means to specify one or a plurality of words, to which the data have been written, in the block for writing, and performing write-back of data in the one or plurality of specified words to a corresponding block in the shared memory.

The above and other objects, features, and advantages of the present invention will become apparent from the following description with reference to the accompanying drawings which illustrate an example of the present invention.

### Brief Description of the Drawings:

FIG. 1 is a view for explaining the configuration of a parallel computer;
FIG. 2 shows an example of a program for parallel processing in a parallel computer;
FIG. 3 is a view for explaining the arrangement of an array in a block of a cache memory in the example of a program for parallel processing by a parallel computer;
FIG. 4A is a view for explaining the operation in a parallel computer that uses an invalidation-based coherence-control write-back cache memory;
FIG. 4B is a view for explaining the operation in a parallel computer that uses an invalidation-based coherence-control write-back cache memory;
FIG. 4C is a view for explaining the operation in a parallel computer that uses an invalidation-based coherence-control write-back cache memory;
FIG. 4D is a view for explaining the operation in a parallel computer that uses an invalidation-based coherence-control write-back cache memory;
FIG. 4E is a view for explaining the operation in a parallel computer that uses an invalidation-based coherence-control write-back cache memory;
FIG. 4F is a view for explaining the operation in a parallel computer that uses an invalidation-based coherence-control write-back cache memory;
FIG. 4G is a view for explaining the operation in a parallel computer that uses an invalidation-based coherence-control write-back cache memory;
FIG. 4H is a view for explaining the operation in a parallel computer that uses an invalidation-based coherence-control write-back cache memory;
FIG. 5A shows the configuration of the cache memory of the first exemplary embodiment of the present invention;
FIG. 5B is a block diagram showing the functional block of control unit 115;
FIG. 6 shows an example of the state and other information bit sequence of a cache memory;
FIG. 7 shows the relation between the state and other information bit sequence of cache memory and the valid/invalid of block data;
FIG. 8 is a flow chart representing the operations of a cache memory;
FIG. 9 is a flow chart representing the operations when a new block of cache memory is allocated;
FIG. 10A is an explanatory view showing an example of commands for reading an entire block from memory;
FIG. 10B is an explanatory view showing an example of a data reply when reading an entire block from memory;
FIG. 10C is an explanatory view showing an example of commands for writing an entire block to memory;
FIG. 10D is an explanatory view showing an example of commands for writing only the word of W(i) =1 of a block to memory;
FIG. 11 is a view for explaining the operations of a cache miss when writing data to a cache memory;
FIG. 12 is a view for explaining the operation of a cache hit when writing cache memory;
FIG. 13 is a view for explaining a cache hit when reading cache memory;
FIG. 14 is a view for explaining operations of a cache miss when reading cache memory;
FIG. 15 is a view for explaining operations of a cache miss when reading cache memory;
FIG. 16 is a view explaining operations when replacing an entry of cache memory;
FIG. 17 is a view for explaining operations of a cache miss when reading cache memory;
FIG. 18 is a view for explaining operations when replacing an entry of cache memory;
FIG. 19 is a view for explaining operations when replacing an entry of cache memory;
FIG. 20A is a view for explaining operations of a parallel computer;
FIG. 20B is a view for explaining operations of a parallel computer;
FIG. 20C is a view for explaining operations of a parallel computer;
FIG. 20D is a view for explaining operations of a parallel computer;
FIG. 20E is a view for explaining operations of a parallel computer; and
FIG. 20F is a view for explaining operations of a parallel computer.

### Description of the Exemplary Embodiments:

Explanation next regards details of exemplary embodiments of the present invention with reference to the accompanying figures.

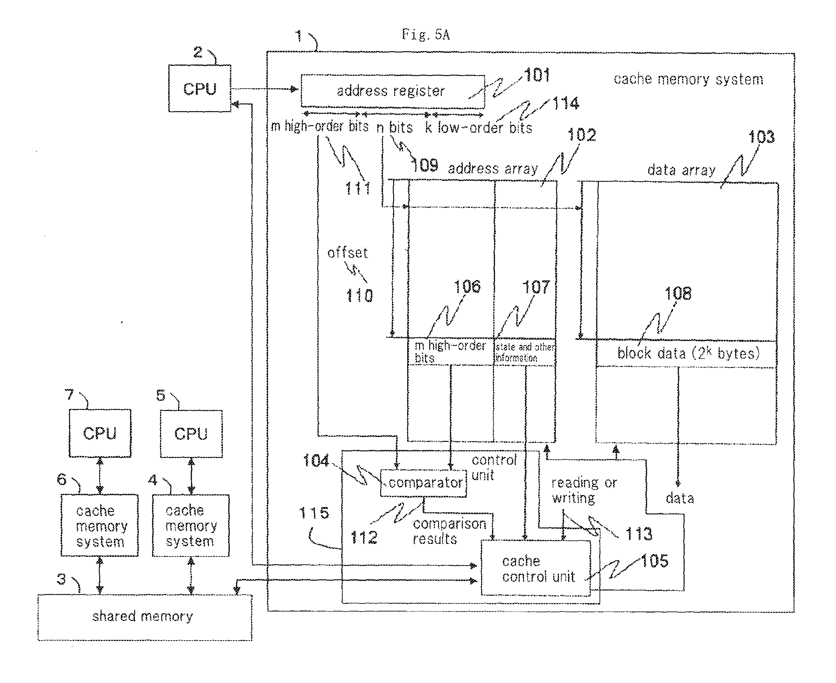

FIG. 5A is a block diagram showing the cache memory system of a first exemplary embodiment of the present invention.

In FIG. 5A, cache memory system 1 is connected to CPU 2 and memory 3. Cache memory system 4 is connected to CPU 5 and memory 3. Cache memory system 6 is connected to CPU 7 and memory 3. The CPUs can generally be referred to as arithmetic units. Each of a plurality of CPUs 2, 5, and 7 accesses shared memory ((hereinbelow referred to as simply "memory") 3 to carry out parallel operations. In FIG. 5A, the number of cache memory systems and CPUs is three each, but the number of these components is not limited to three and can be any plural number.

Cache memory systems 1, 4, and 6 are of the same configuration. As a result, the following explanation will concern cache memory system 1 of cache memory systems 1, 4, and 6.

Cache memory system 1 includes address register 101, address array 102, data array 103, comparator 104, and cache control unit 105. Comparator 104 and cache control unit 105 are contained in control unit 115.

Address register 101 stores addresses requested by CPU 2. The addresses stored in address register 101 are represented by m high-order bits 111, n middle bits 109, and k low-order bits 114.

The data of the m high-order bits 111 are provided to comparator 104. The data of the n middle bits 109 are provided to address array 102 and data array 103.

Address array 102 is a memory having 2ⁿ entries (hereinbelow referred to as "address entries"). Data array 103 is also a memory having 2ⁿ entries (hereinbelow referred to as "data entries"). Data array 103 has a plurality of blocks (data entries) composed of a plurality of words.

The address entries have a one-to-one correspondence to data entries according to the data of n middle bits 109.

Each address entry has an offset that corresponds to any value that can be expressed by the data of n middle bits 109. As a result, each address entry corresponds to n middle bits 109. The offset is typically referred to as an index. Address array 102 is used as an index of data (block data) that are stored on a block basis in the data entries of data array 103.

Each address entry in address array 102 includes, for each offset that corresponds to n middle bits 109, m high-order bits 106 of an address and a bit sequence that represents the state and other information of that block (hereinbelow referred to as "state and other information bit sequence") 107. The m high-order bits 106 of an address is a portion of the address of block data (block address).

One example of storage means is the portion of address array 102 that stores m high-order bits 106 for each of offsets that correspond to n middle bits 109. The storage means stores an address group of memory 3 (the data of m high-order bits 106 and the data of n middle bits 109) that corresponds to data entries in which data are stored in at least one word.

This address group refers to a plurality of addresses in which the data of m high-order bits and the data of n middle bits are defined and the data of k low-order bits are any value.

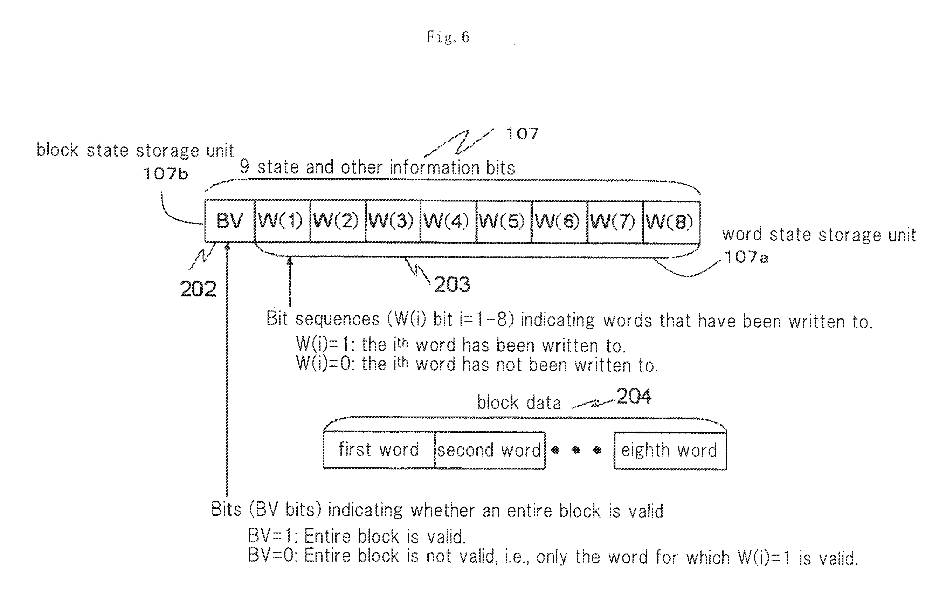

The portion of address array 102 that stores state and other information bit sequence 107 includes word state storage unit 107a and block state storage unit 107b (see FIG. 6).

Word state storage unit 107a can typically be referred to as word state storage means.

Word state storage unit 107a stores word state information (W(1)-W(8)) for specifying words, in which data from CPU 2 have been written, in association with addresses that have been placed in correspondence with these words. Block state storage unit 107b can typically be referred to as block state storage means.

Block state storage unit 107b stores, for each address group that corresponds to a block in data array 103, block state information (BV) indicating whether data, which is read from memory 3, have been stored in words, in which data from CPU 2 have not been written, in the words within the block.

Details regarding state and other information bit sequence 107 will be described later.

Address array 102, upon receiving data of n middle bits 109 as offset 110, provides the data of m high-order bits 106 and the data of state and other information bit sequence 107 in the address entry that corresponds to offset 110.

The data of m high-order bits 106 is provided to comparator 104. The data of state and other information bit sequence 107 is provided to cache control unit 105.

One data entry of data array 103 stores 2^{k} bytes of block data (hereinbelow referred to as simply "block") 108.

Data entries have a one-to-one correspondence to address entries, and the blocks in each data entry therefore have a one-to-one correspondence to address entries.

Comparator 104 compares the data of m high-order bits 106 from address array 102 and the data of m high-order bits 111 from address register 101.

Matching of the data of m high-order bits 106 with the data of m high-order bits 111 means that blocks that contain data designated by addresses in address register 101 are in the cache memory (more specifically, address array 102 and data array 103).

Cache control unit 105 controls the cache memory (more specifically, address array 102 and data array 103) based on comparison results 112 from comparator 104, information 113 that indicates whether access is for reading or writing, and state and other information bit sequence 107 from address array 102.

Control unit 115 can generally be referred to as control means.

Control unit 115 controls the operations of cache memory system 1.

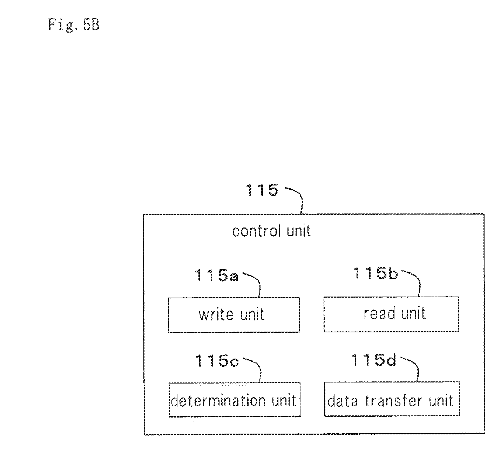

FIG. 5B is a block diagram showing the functions of control unit 115 as functional parts.

In FIG. 5B, control unit 115 includes write unit 115a, read unit 115b, determination unit 115c, and data transfer unit 115d.

Write unit 115a can generally be referred to as writing means,

Write unit 115a allocates any of a plurality of blocks in data array 103 as the block for writing data when an address from CPU 2 is not in address array 102 (more specifically, the portion for storing m high-order bits 106 for each offset that corresponds to n middle bits 109) when writing from CPU 2.

Without reading data of the block, which corresponds to the address from CPU 2, from memory 3, write unit 115a places any word in the block for writing data in correspondence with the address from CPU 2 and writes data from CPU 2 into that word.

Read unit 115b can generally be referred to as read means.

When word state storage unit 107a stores word state information (W(i)=1) that corresponds to an address from CPU 2 or when block state storage unit 107b stores block state information (BV=1) that corresponds to an address from CPU 2, read unit 115b, upon receipt of reading instruction from CPU 2, reads data from the word in data array 103 that is specified in the address.

In addition, if a cache miss occurs when receiving the reading instructions from CPU 2, read unit 115b reads the data in the block, which corresponds to the address from CPU 2 (hereinbelow referred to as "corresponding block"), from memory 3.

Read unit 115b next refers to word state storage unit 1 07a to specify one or a plurality of words, to which data from CPU 2 have not been written, from among the words in the corresponding block in data array 103.

Read unit 115b writes, from among the data in the words of the block that is read from memory 3, the data, which corresponds to the one or the plurality of specified words, into only the one or plurality of words that were specified. Read unit 115b stores block state information (BV=1) in block state storage unit 107b. The block state information (BV=1) indicates that data, which is read from memory 3, are stored into the one or plurality of words, in which data from CPU 2 have not been written, of the words in the block.

Determination unit 115c can generally be referred to as determination means. Determination unit 115c, upon receiving an address from CPU 2 when receiving reading instruction from CPU 2, refers to word state storage unit 107a and block state storage unit 107b to determine whether a cache hit or cache miss has occurred for that address.

Data transfer unit 115d can generally be referred to as data transfer means. Data transfer unit 115d writes only the data of the one or plurality of specified words in the block in data array 103 to the corresponding block in memory 3. For example, when the address of memory 3 that corresponds to a block in data array 103 switches, data transfer unit 115d refers to word state storage unit 107a and performs write-back of the entire block to the corresponding block in memory 3 when data from CPU 2 have been written to all of the words in that block. Data transfer unit 115d otherwise specifies one or a plurality of words to which data have been written by CPU 2 from among the words in that block and performs write-back of only data in the one or plurality of specified words to the corresponding block in memory 3.

In the following explanation: the addresses stored in address register 101 are of 64 bits; k=6, i.e., the size of blocks is 64 bytes; n =10, i.e., both the number of address entries of address array 102; and the number of data entries of data array 103 are 1024; and m=48. The 64-byte blocks are composed of eight words. One word is eight bytes.

Although a direct-mapping cache memory is presented in the present exemplary embodiment, the cache memory of the present exemplary embodiment can also be applied in a set-associative cache memory. In such a case, address array 102, data array 103, and comparator 104 are required for each of the number of ways.

Explanation next regards the operations of cache memory system 1 shown in FIGs. 5A and 5B.

When cache memory system 1 has been accessed, address register 101 stores the address. This address may be a logical address or a physical address.

In the present exemplary embodiment, explanation will be presented for a case in which this address is a physical address that has been converted from a virtual address by some type of address conversion means.

Because the size of blocks is 64 bytes, the data of 6 (k) low-order bits 114 of address register 101 are the address of a word in a block of data array 103. Using the data of 10 (n) middle bits 109 as the offset 110 of address array 102, data in an address entry of address array 102 (data of 48 (m) high-order bits 106 and data of state and other information bit sequence 107) are read. Comparator 104 compares the data of 48 (m) high-order bits 106 that have been read and the data of 48 (m) high-order bits 111 in address register 101 and determines whether the block, which contains the data designated by the address in address register 101, is already in the cache memory.

Cache control unit 105 receives comparison results 112 of comparator 104, information 113, and state and other information bit sequence 107.

Cache control unit 105 determines the operations of the cache memory based on comparison results 112, information 113, and bit sequence 107.

Details of the operation of cache control unit 105 will be explained later.

FIG. 6 is an explanatory view showing an example of state and other information bit sequence 107 that is stored in address array 102.

State and other information bit sequence 107 is made up from 9 bits. More specifically, state and other information bit sequence 107 is composed of BV 202 of one bit and W(i) (i=1-8) 203 of eight bits. W(i) (i=1-8) 203 is composed of W(1)-W(8) of one bit

W(1)-W(8) 203 corresponds to the address of each word in block data in data array 103, i.e., each word. The block data are composed of eight words, As a result, W(1) corresponds to the first word of block data 204. W(2) corresponds to the second word. W(3) corresponds to the third word. W(4) corresponds to the fourth word. W(5) corresponds to the fifth word. W(6) corresponds to the sixth word. W(7) corresponds to the seventh word. W(8) corresponds to the eighth word.

A value of "1" of W(i) 203 indicates that data have been written to the i^{th} word by CPU 2. In other words, when W(i) 203 is "1," valid data that have been written by CPU 2 are stored in the i^{th} word of block data 204.

A value of "0" of W(i) 203 indicates that data have not been written to the i^{th} word by CPU 2.

BV 202 indicates whether an entire block in data array 103, which corresponds to an address entry that contains BV202, is valid or not.

More specifically, a value of "1" of BV 202 means that data that have been read from memory 3 are stored in a word to which data have not been written by CPU 2 (W(i) 203 is "0"), and means that the entire of corresponding block is valid. In other words, a value "1" of BV 202 means that, even when the value of W(i) 203, which indicates the state of the ¡^{th} word, is "0," i.e., even when W(i) 203 indicates that CPU 2 has not written data to the i^{th} word, data which had been read from memory 3 have been written to the ¡^{th} word and valid data are therefore stored in the i^{th} word.

In addition, a value "0" of BV 202 means that only the data of the word, for which the value of W(i) 203 is "1", are valid and that the data of a word, for which the value of W(i) 203 is "0", are invalid.

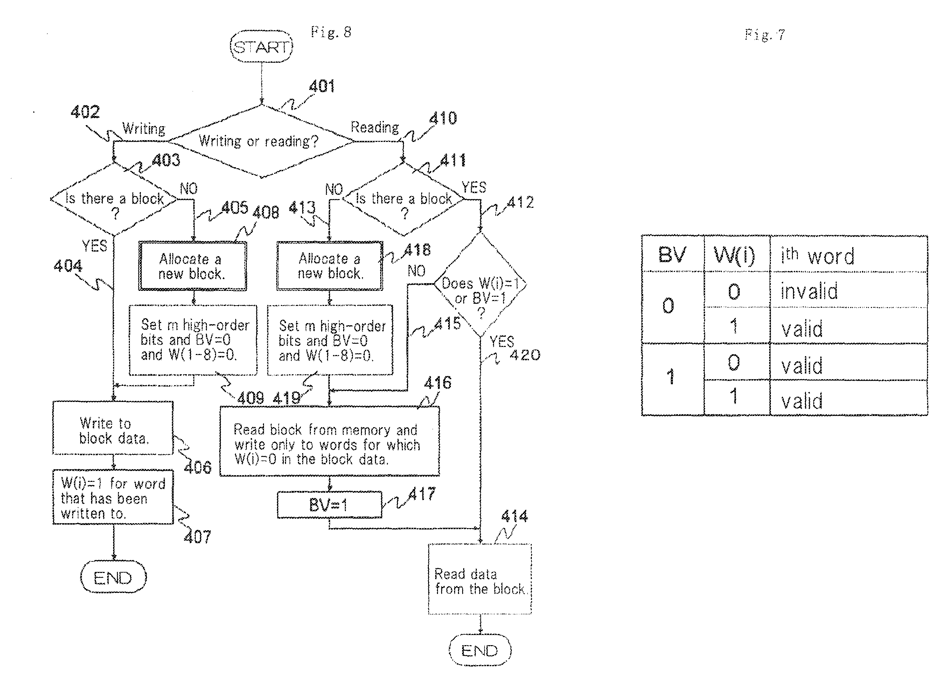

FIG. 7 is an explanatory view showing the validity/invalidity of the i^{th} word according to BV 202 and the value of W(i) 203 shown in FIG. 6.

Explanation next regards the details of the operations of the first exemplary embodiment while referring to FIGs. 5A, 5B, and 6.

FIG. 8 is a flow chart for explaining the operations of cache control unit 105. When address register 101 stores an address that is used to access the cache memory, the data of 10 (n) middle bits 109 of this address are used as offset 110 of address array 102 and data array 103. In this way, the data of 48 (m) high-order bits 106 and the data of state and other information bit sequence 107 in the address entry of address array 102 are read, and the data entry of data array 103 is thus accessed.

Comparator 104 compares the data of 48 (m) high-order bits 106 that have been read and 48 (m) high-order bits 111 in address register 101 to determine whether a block, which contains data designated by the address in address register 101, are already in the cache memory,

Cache control unit 105 receives comparison results 112 of comparator 104, the data of state and other information bit sequence 107, and information 113 indicating whether the access was for reading or writing.

Information 113 is provided from CPU 2. Cache control unit 105 further receives data of 6 (k) low-order bits. Cache control unit 105 also receives data for writing from CPU 2 when the access is for writing.

In Step 401, cache control unit 105 determines based on information 113 whether the access is for writing or reading.

When the access is for writing in Step 402, cache control unit 105 first executes Step 403.

In Step 403, cache control unit 105 determines whether the entry, which stores the block that was accessed, is already in the cache memory (address array 102 and data array 103) based on comparison results 112 of comparator 104. When comparator 112 indicates matching, cache control unit 105 determines that the accessed block is in the cache memory in Step 404.

On the other hand, when comparison results 112 do not indicate matching, cache control unit 105 determines that the accessed block is not in the cache memory in Step 405.

When it is determined that the accessed block is in the cache memory in Step 404, cache control unit 105 specifies the word in block data 108 based on the data of 6 (k) low-order bits in Step 406, writes the data for writing to this word, and then makes the value of W(i) 203 correspond to the word, to which data were written, "1" in Step 407.

If the accessed block is not in cache in Step 405, cache control unit 105 carries out a process of allocating a new block in Step 408.

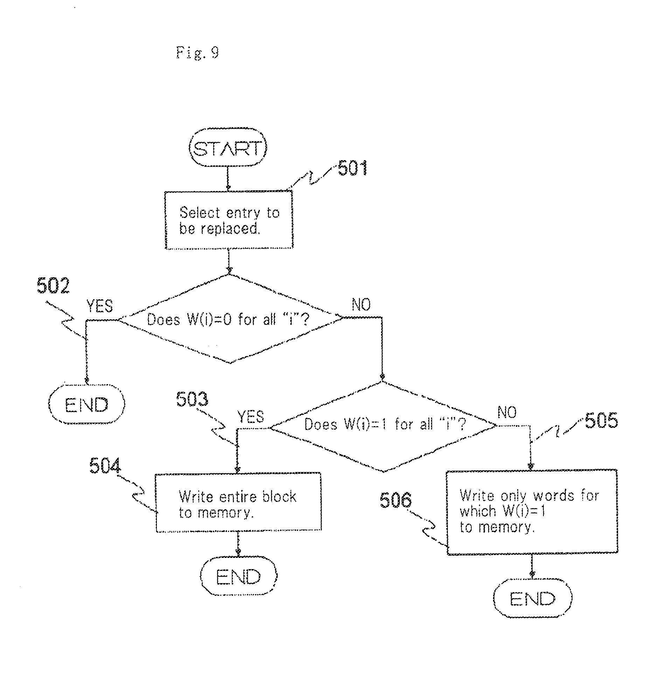

The process of allocating a new block (Step 408) will be explained in detail later using FIG. 9.

After step 408, cache control unit 105 in Step 409 writes the data of 48 (m) high-order bits 111 of address register 101 to 48 (m) high-order bits 106 of an entry of address array 102 corresponding to the newly allocated block of data array 103 and zero-clears (BV=0, W(1-8)=0) state and other information bit sequence 107 of the similarly corresponding entry of address array 102 to implement initialization.

After Step 409, cache control unit 105 specifies the word in the newly allocated block of data array 103 based on the data of the 6 (k) low-order bits and writes the data for writing to this word in Step 406, and then sets the value of W(i) 203, which corresponds to the word to which data have been written, to "1" in Step 407.

On the other hand, when the access is for reading in Step 410, cache control unit 105 executes Step 411.

In Step 411, cache control unit 105 determines, based on comparison results 112 of comparator 104, whether the entry that stores the accessed block is already in the cache memory.

When comparison results 112 indicate matching, cache control unit 105 determines that the accessed block is in the cache memory in Step 412.

On the other hand, when comparison results 112 do not indicate matching, cache control unit 105 determines that the accessed block is not in the cache memory in Step 413.

When the accessed block is in the cache memory in Step 412, and moreover, the value of W(i) corresponding to the accessed word is "1" or the BV of the accessed block is "1" in Step 420, cache control unit 105 reads data from the word in accessed block data 108 in data array 103 in Step 414.

When the accessed block is in the cache memory in Step 412, and moreover, the value of W(i) corresponding to the accessed word is "0" and BV of the accessed block is "0" in Step 415, cache control unit 105 in Step 416 reads the data of that block from memory 3 and writes the data, which have been read, to only the words, whose W(i) is equal to0, of the words in block data 108 of that entry in data array 103.

Cache control unit 105 next makes BV 202 in the entry of address array 102, which corresponds to that block, "1" in Step 417.

Cache control unit 105 next reads data from the accessed word in data array 103 in Step 414.

When the accessed block is not in the cache memory in Step 413, cache control unit 105 carries out a process of allocating a new block in Step 418. The process of allocating a new block (Step 418) will be explained in detail later using FIG. 9.

Next, cache control unit 105 writes the data of 48 (m) high-order bits 111 of address register 101 to 48 (m) high-order bits 106 of the entry of address array 102 that corresponds to the newly allocated block in Step 419 and zero-clears (BV=0 and W(1-8)=0) state and other information bit sequence 107 of the similarly corresponding entry of address array 102 to realize initialization. Cache control unit 105 next reads the data of the block from memory 103 and writes the data, which have been read, to only the words, whose W(i)==0, of the words in block data 108 of the entry of data array 103 that corresponds to the block in Step 416. In this case, state and other information bit sequence 107 has been zero-cleared in Step 419 and data is therefore written to all of block data 108.

Cache control unit next sets BV 202 in the corresponding entry of address array 102 to "1" in Step 417.

Cache control unit 105 then reads data from the accessed word in data array 103 in Step 414.

Explanation next regards Steps 408 and 418 with reference to FIG. 9.

In Step 501, cache control unit 105 first selects an entry which will be replaced in order to allocate a new entry.

In the present exemplary embodiment, a direct-mapping cache memory is used, and as a result, an entry, which will be replaced in order to allocate a new block, is uniquely determined based on the accessed address.

If a set-associative cache memory is used, there will be a plurality of entries that are the object of replacement and determined from the address, and one entry of these entries, which will be replaced, can be determined from, for example, access history.

Cache control unit 105 next determines whether data from CPU 2have been written to the block of the selected entry.

If W(i) 203 of all words of the selected entry is "0" in Step 502, then data from CPU 2 have not been written to this block. In this case, cache control unit 105 can use the entry as is without performing write-back.

If W(i) 203 of all words of the selected entry is "1" in Step 503, then the entire block has been written by CPU 2. In this case, cache control unit 105 performs write-back of the data of the entire block to memory 3 in Step 504.

If W(i) 203 of a portion of the words of the selected entry is "1" in Step 505, only those words whose W(i) 203 is "1" have been rewritten. In this case, cache control unit 105 performs write-back to memory 3 for only data of those words whose W(i) 203 is "1" in Step 506. In addition, the data of words whose W(i) 203 is "0" are not written to memory 3.

Operations relating to the writing of data performed by comparator 104 and cache control unit 105 are carried out by write unit 115a.

In addition, operations relating to reading of data performed by comparator 104 and cache control unit 105 are carried out by read unit 115b.

In addition, operations relating to the determination of a cache hit or a cache miss that are carried out by comparator 104 and cache control unit 105 are carried out by determination unit 115c.

Still further, operations relating to data transfer between data array 103 and memory 3 implemented by comparator 104 and cache control unit 105 are carried out by data transfer unit 115d.

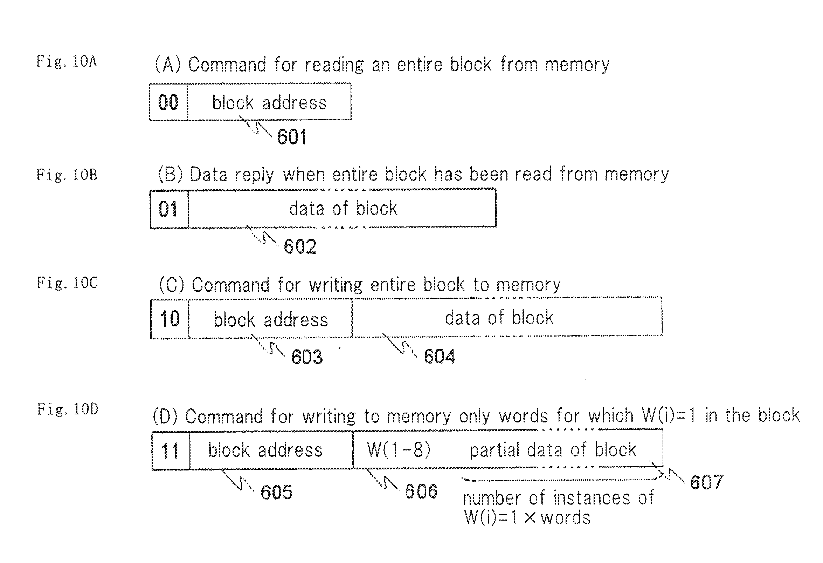

FIGs. 10A-10D are explanatory views for explaining commands that are sent to memory 3 by cache memory system 1 (more specifically, cache control unit 105) and replies to these commands from memory 3 to cache memory system 1 (more specifically, cache control unit 105).

FIGs. 10A and 10B are explanatory views showing an example of a command to read an entire block and its reply.

In the present exemplary embodiment, an address is 64 bits and the size of a block is 64 bytes. As a result, memory 3 reads a block designated by block address 601 (58 bits) of the command and sends block data 602 (64 bytes) in the format of the data reply shown in FIG. 10B to cache control unit 105.

FIG. 10C is an explanatory view showing an example of a command whereby cache memory system 1 (more specifically, cache control unit 105) writes an entire block to memory 3.

This command is composed of block address 603 (58 bits) and block data 604 (64 bytes).

FIG. 10D is an example of a command for causing writing of only the data of words whose W(i) 203 is "1" among the words in block data 604 from cache memory system 1 to memory 3.

This command includes: block address 605 (58 bits), W(1-8) 606 (8 bits), and partial block data 607 composed of data of words whose W(i) 203 is "1" (8 bytes-54 bytes).

The length of this command changes according to the number of words whose W(i) 203 is "1."

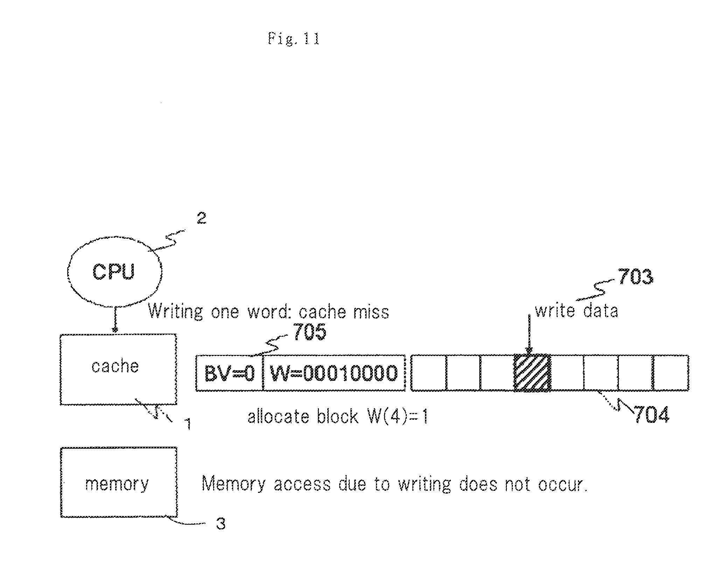

Explanation next regards the state and other information bit sequence and operations such as memory access in the present exemplary embodiment taking as an example a block that is in the cache with reference to FIGs. 11-19.

FIG. 11 is an explanatory view for explaining the operations when a cache miss occurs when there is writing of one word from CPU 2.

When a cache miss occurs in the writing of one word, the block that includes this word is newly allocated to cache memory system 1 (BV=0, W=00000000), write data 703 are written to the fourth word of block data 704 of data array 103 in accordance with the address at the time of writing, and W(4) of state and other information bit sequence 705, which corresponds to the word into which data were written, is set to "1" (BV=0, W=00010000).

Although the replacement of a block that accompanies the allocation of a new block may initiate memory access, access to memory that accompanies writing itself does not occur.

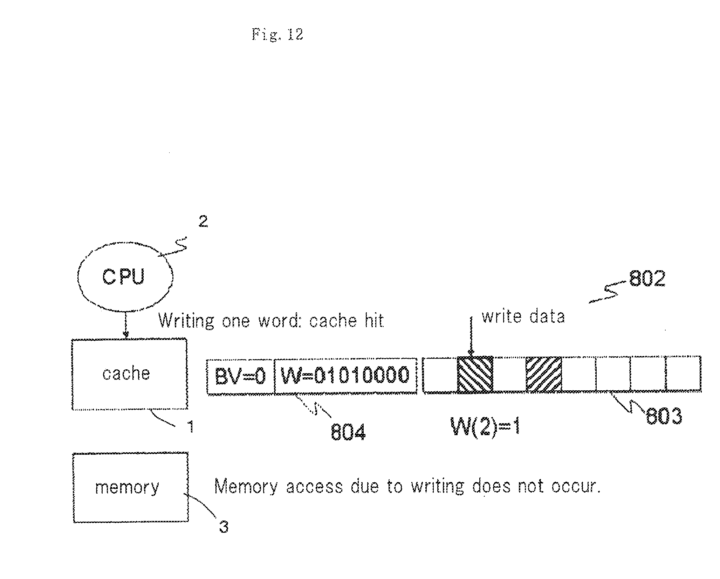

FIG. 12 is an explanatory view for explaining operations when there is writing of one word from CPU 2 to the second word of the same block as shown in FIG. 11 and a cache hit occurs.

When the writing of one word results in a cache hit, data 802 are written to the second word of block data 803 of data array 102 and W(2) of state and other information bit sequence 804 becomes "1" (BV=0, W=01010000). In this case as well, access of memory 3 due to writing does not occur.

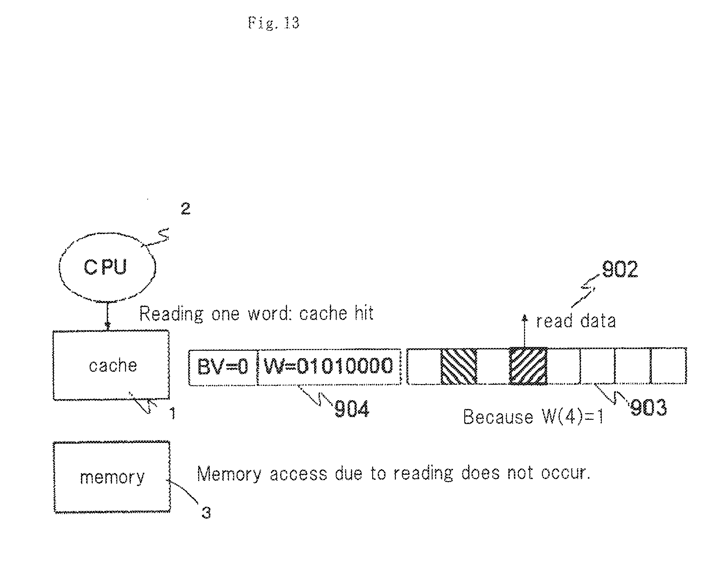

FIG. 13 is an explanatory view for explaining the operations when CPU 2 reads data in the fourth word of the same block as the block shown in FIG. 12 and a cache hit occurs.

When reading of one word results in a cache hit, the data is read from the fourth word of block data 903 of data array 102 and is returned to CPU 2 as read data 902.

In this case, state and other information bit sequence 904 is not updated (BV=0, W=01010000).

However, when the cache memory is set-associative, the portion that is access history can be updated for replacement. In addition, access to memory 3 that accompanies reading does not occur.

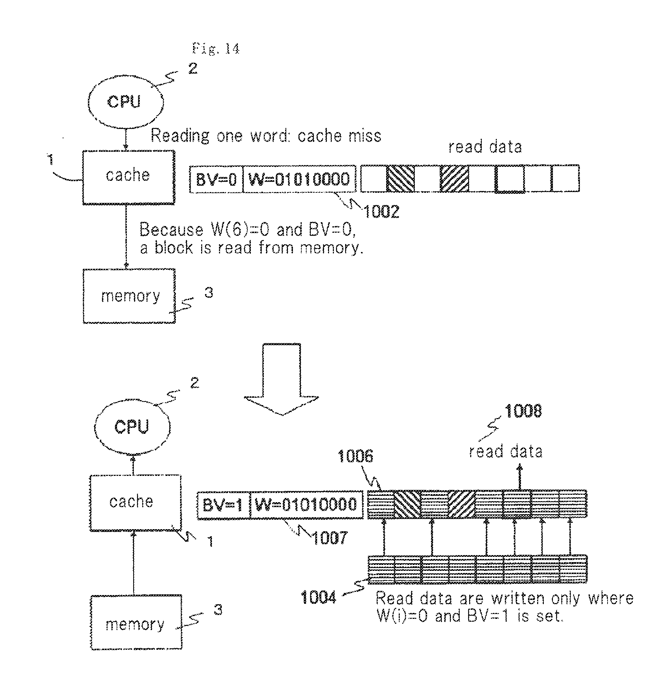

FIG. 14 shows the operations when CPU 2 reads data in the sixth word of the same block as the block shown in FIG. 13 and a cache miss occurs.

Since state and other information bit sequence 1002 is W(6)=0 and BV=0, the reading of one word results in a cache miss, and cache control unit 105 uses the command shown in FIG. 10A to read data in the same block as the block shown in FIG. 13 from memory 3.

Then, when block data 1004 that has been read from memory 3 is returned in the format of the data reply indicated in FIG. 10B to cache memory system 1 (cache control unit 105), only data of those words, whose W(i) is equal to 0 (the data of the first, third, and fifth to eighth words) of block data 1004 are written to block 1006, and BV 202 of state and other information bit sequence 1007 becomes "1" (BV=1 and W=01010000).

The data of the sixth word are then returned to CPU 2 as read data 1008.

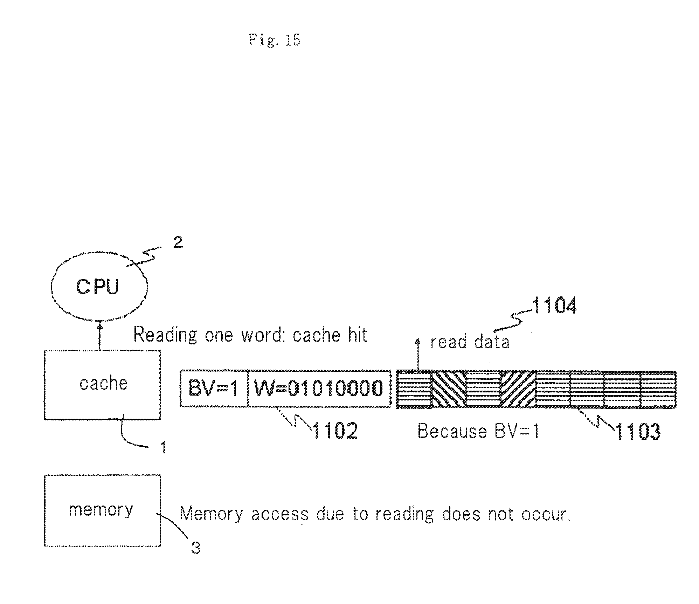

FIG. 15 shows the operations when CPU 2 reads data in the first word of the same block as the block shown in FIG. 14 and a cache hit occurs.

BV 202 of state and other information bit sequence 1102 is "1" and the reading of one word therefore results in a cache hit and data in the first word of block data 1103 are returned to CPU 2 as read data 1104.

In this case, state and other information bit sequence 1102 is not updated (BV=1, W=01010000).

However, when the cache memory is set-associative, there is a possibility of updating of the access history portion for the purpose of replacement. In addition, memory access caused by reading does not occur.

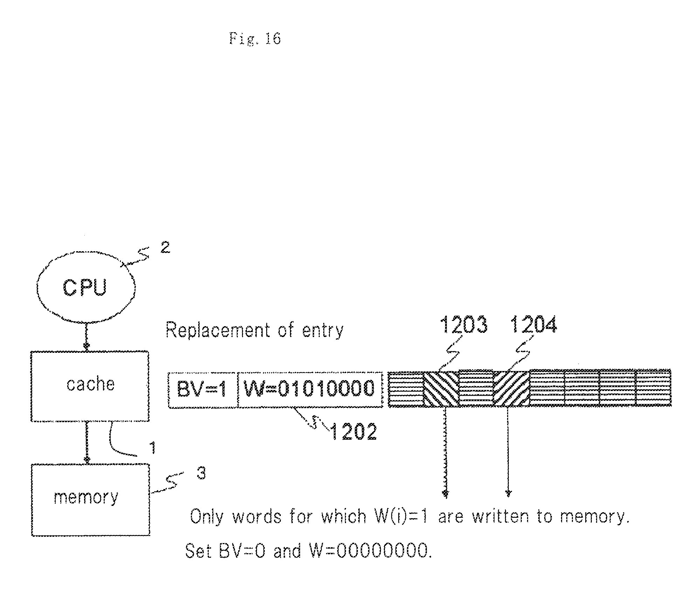

FIG. 16 shows the operations when an entry of the same block as the block shown in FIG. 15 is the object of replacement.

Data are written from CPU 2 to the second word and fourth word and W(2) and W(4) of state and other information bit sequence 1202 are "1" (W=01010000). As a result, only data 1203 and 1204 in the second word and fourth word are written to memory 3 using the command shown in FIG. 10D. State and other information bit sequence 1202 is then initialized (BV=0, W=00000000),

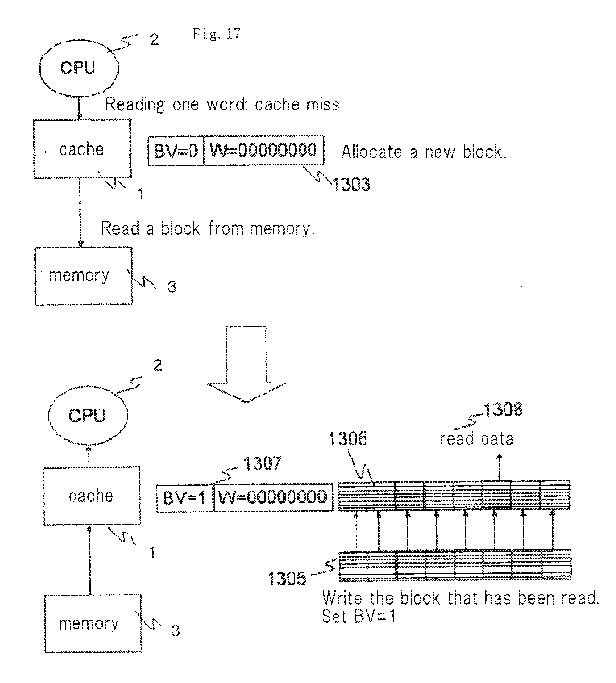

FIG. 17 shows the operations when CPU 2 reads data in a particular word and a cache miss occurs.

The block including the word in which data should be read is not in cache memory 1, and a new block is therefore allocated and state and other information bit sequence 1303 is initialized (BV=0, W=00000000).

Data in the block including the word in which data should be read is next read from memory 3 using the command shown in FIG. 10A.

Block data 1305 that is read from memory 3 is returned to cache memory 1 in the format of the data reply of FIG. 10B and written to block 1306.

BV of state and other information bit sequence 1307 next becomes "1" (BV=1, W=00000000). Read data 1308 is then returned to CPU 2.

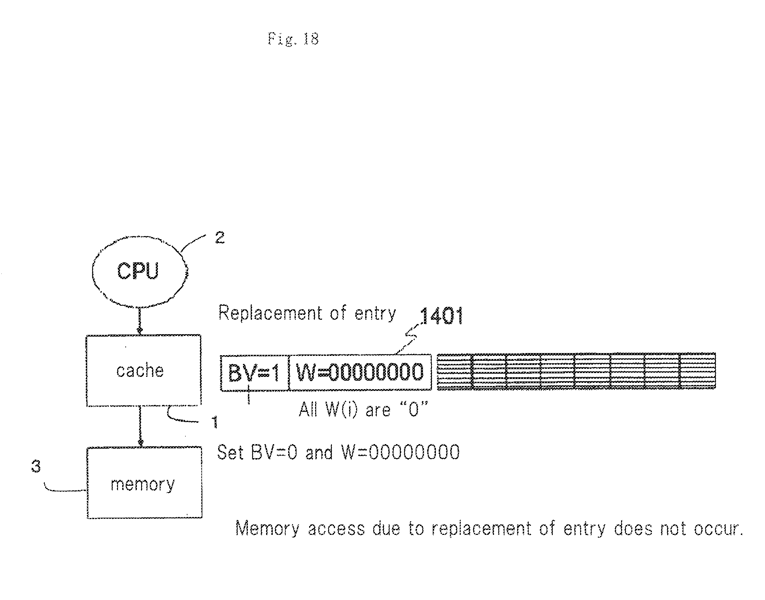

FIG. 18 shows the operations when an entry of the same block as the block shown in FIG. 17 becomes the object of replacement.

All W(i) of state and other information bit sequence 1401 of this block are "0" (W=00000000). As a result, a process is carried only to make BV "0" (BV=0, W=00000000). Memory access resulting from the replacement of the entry does not occur.

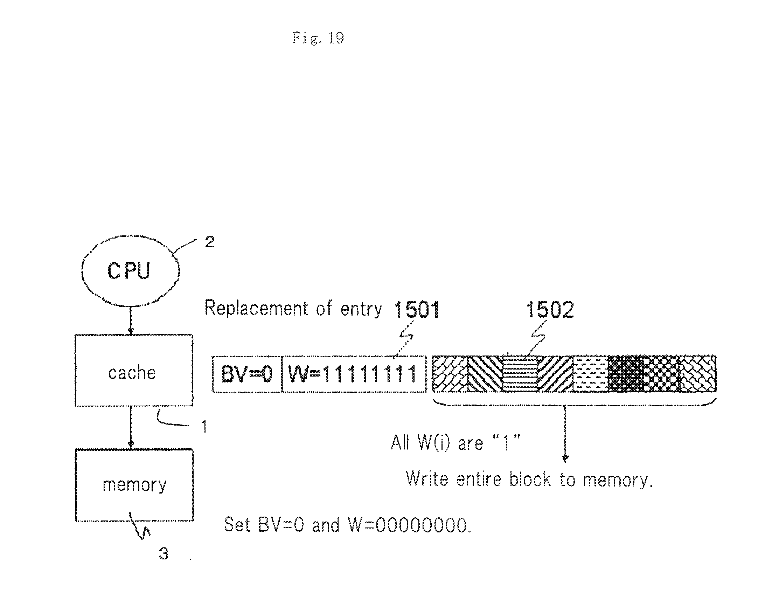

FIG. 19 shows the operations when the entry of a particular block becomes the object of replacement.

All W(i) of state and other information bit sequence 1501 of this block are "1" (W=11111111). As a result, all block data 1502 are written to memory 3 using the command of FIG. 10C.

State and other information bit sequence 1501 is next initialized (BV=0, W=00000000),

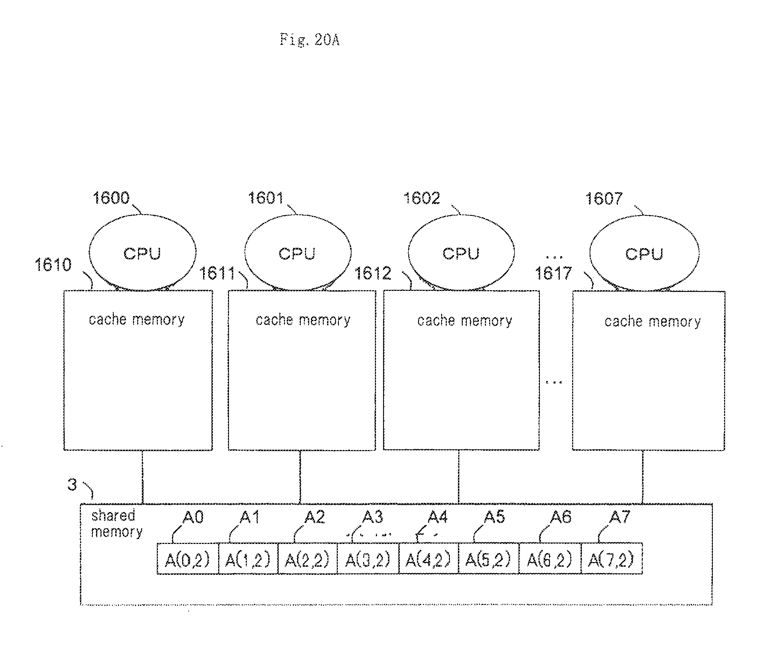

Explanation regarding the operations and effect when parallel processing of the loop shown in FIG. 2 is carried out by parallel computers such as shown in FIG. 5A is next presented using FIGs. 20A-20F. In FIGs. 20A-20F, CPUs 1600-1607 access memory 3 to carry out parallel operations. In addition, cache memory systems 1610-1617 are of the same configuration as cache memory system 1 shown in FIG. 5A.

Here, explanation regards the processing when CPUs 1600-1607 write data in order to words A0-A7.

FIG. 20A is the state before entering the loop.

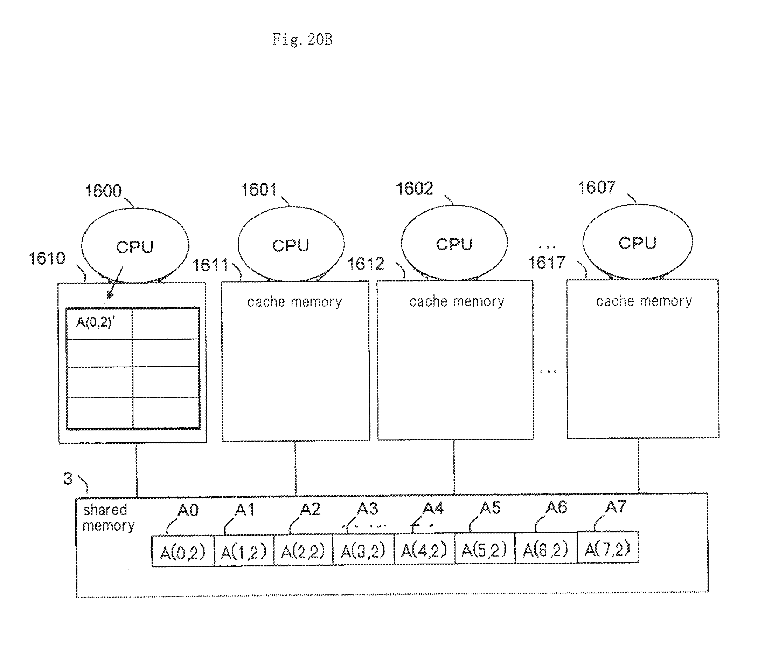

CPU 1600 first attempts to write data to word A0, and when a cache miss occurs, CPU 1600 allocates the block of words A0-A7 to cache memory system 1610 and writes data A(0, 2)' to word A0 (BV=1, W=10000000) (see FIG. 20B).

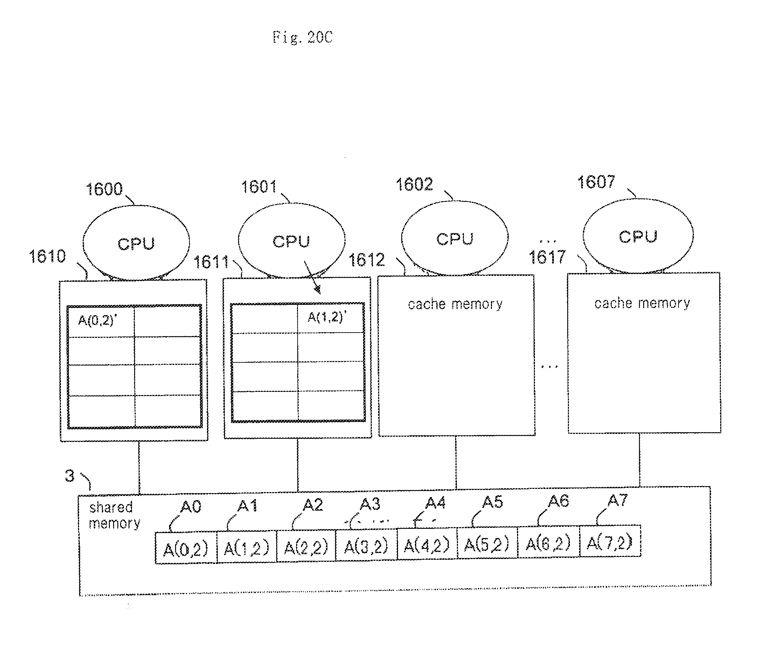

CPU 1601 next attempts to write data to word A1, and when a cache miss occurs, CPU 1601 allocates the block of words A0-A7 to cache memory system 1611 to write data A(1, 2)' to word A1 (BV=0, W=01000000) (see FIG. 20C).

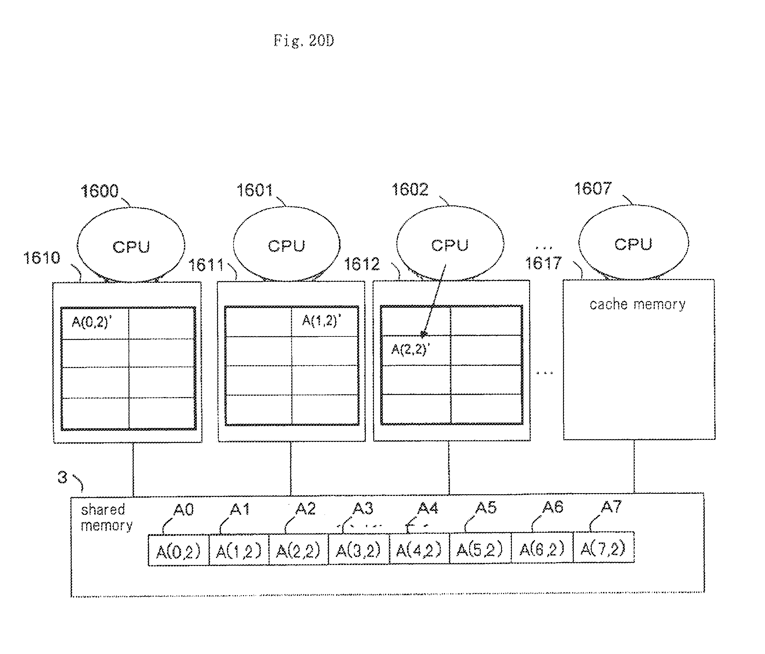

CPU 1602 next attempts to write data to word A2, and when a cache miss occurs, CPU 1602 allocates the block of words A0-A7 to cache memory system 1612 to write data A(2, 2)' to word A2 (BV=0, W=00100000) (see FIG. 20D).

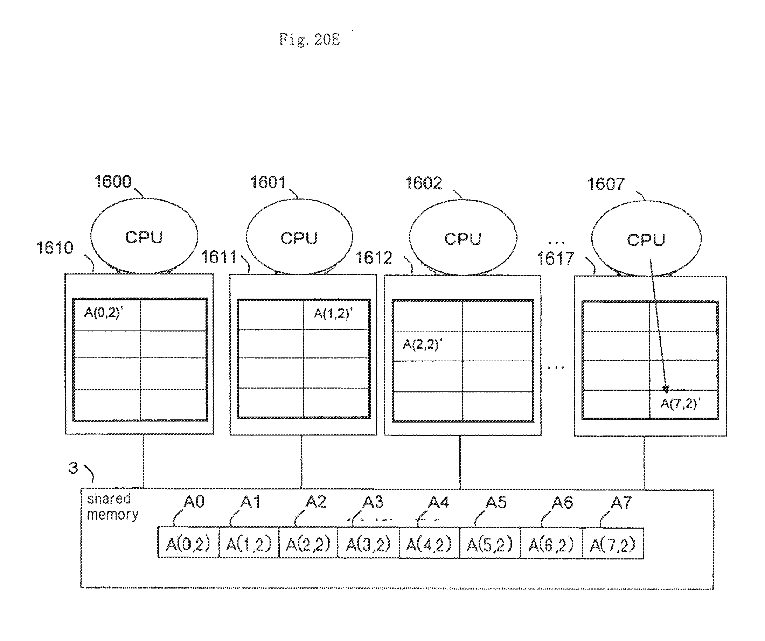

The following processing is carried out similarly by CPUs 1603-1606, and CPU 1607 then attempts to write data to word A7, and when a cache miss occurs, CPU 1607 allocates the block of words A0-A7 to cache memory system 1617 to write data A(7, 2)' to word A7 (BV=0, W=00000001) (see FIG. 20E).

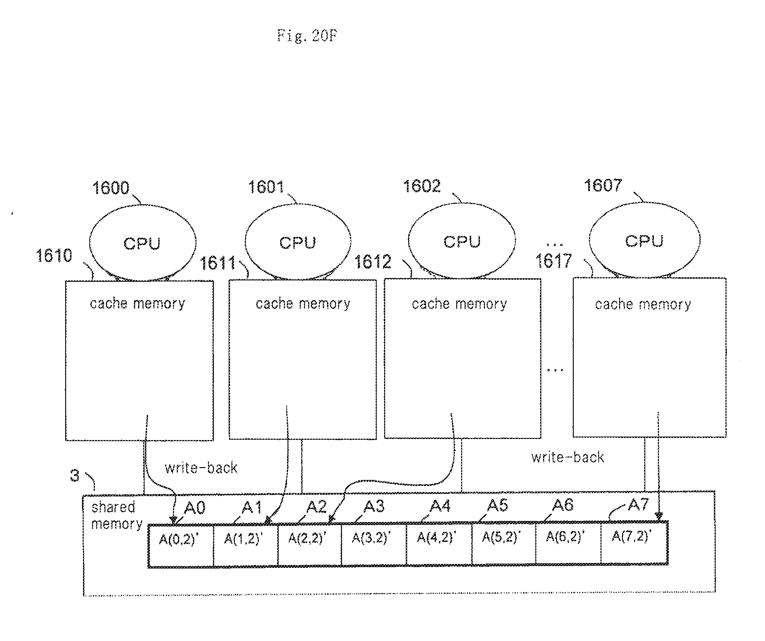

Finally, each of CPUs 1600-1607 performs write-back of the updated data to memory 3 to reflect the updating of the cache memory in memory 3 (see FIG. 20F).

Only the data of words in which data from CPU have been written are written from each CPU to memory 3 and write-back therefore need not be carried out simultaneously.

At the time that write-back from all CPUs has been completed, the latest data are stored in memory 3.

When the cache memory of the present exemplary embodiment is employed in this way, memory access occurs only at the time of the write-back from cache memory system to memory. In other words, at the time of writing, memory access does not occur.

In contrast, in the method explained in FIG. 4, reading of block data from the shared memory occurs eight times, and writing of a block data to the shared memory occurs seven times.

According to the present exemplary embodiment, when an address from CPU 2 is not in address array 102 (the portion that stores m high-order bits 106 for each offset that corresponds to n middle bits 109) at the time of writing from CPU 2, control unit 115 (write unit 115a) allocates any of a plurality of blocks in data array 103 as the block for writing. Control unit 115 (write unit 115a) then places any word in this block for writing in correspondence with the address from CPU 2 and writes the data from CPU 2 in this word.

Word state storage unit 107a stores word state information for specifying the word, to which data from CPU 2 have been written, in association with the address that has been placed in correspondence with the word.

When a block for writing data in memory will be replaced by a different block, control unit 115 (data transfer unit 115d) refers to word state storage unit 107a to specify one or a plurality of words in this block, to which data from CPU have been written, and performs write-back of only data in this one or plurality of words, which have been specified, to a corresponding block in memory 3.

As a result, when a cache miss occurs at the time of writing of data to cache memory, data can be stored in cache memory on a word basis without reading data from memory 3. In addition, at the time of write-back, only data that have been written from CPU 2 can be written to memory 3.

As a result, when a plurality of CPUs execute parallel processing of the loop shown in FIG. 2, reading the data of the block from memory need not be carried out for each writing of data from a CPU even when data is written to one block by a plurality of CPUs.

In addition, the cache memory of other CPUs need not be invalidated to allow write-back of data to memory 3 for each writing by a CPU.

When each CPU explicitly performs write-back of data in blocks in cache memory at the time of completion of the execution of a loop, each write-back can be carried out independently. Even if each write-back is performed at different timing, the latest data are stored in memory 3 at the time of completion of all write-backs.

Accordingly, a cache memory system can be provided in which memory access is not carried out due to unnecessary coherence control of cache memory during the execution of a DO loop.

Further, in cache memory system 1 of the present exemplary embodiment, the same action and effects as previously described can be obtained despite the omission of address register 101, block state storage unit 107b, read unit 115b, and determination unit 115c.

In addition, in the present exemplary embodiment, when word state storage unit 107a stores word state information that corresponds to an address from CPU 2 at the time of reading of data by CPU 2, read unit 115b reads data from the word that is designated in the word state information.

In this case, the written data can be provided to CPU 2 without communicating with memory 3.

In addition, in the present exemplary embodiment, block state storage unit 107b stores block state information (BV) that indicates, for each address group that corresponds to blocks of data array 103, whether data, which have been read from memory 3, are stored in words in the block in which data from CPU have not been written.

When an address is received from CPU 2 at the time of reading of data by CPU 2, control unit 115 (determination unit 115c) refers to word state storage unit 107a and block state storage unit 107b to determine whether a cache hit or cache miss has occurred for this address.

In this case, it can be determined whether a cache hit has occurred or not on a word bases.

In the present exemplary embodiment, moreover, when a cache miss occurs at the time of reading of data by CPU 2, control unit 115 (read unit 115b) reads data in a block, which corresponds to the address from CPU 2, from memory 3. Control unit 115 (read unit 115b) further refers to word state storage unit 107a to specify one or a plurality of words, to which data have not been written, in the block of data array 103.

Control unit 115 (read unit 115b) further writes data in block that have been read from memory 3 only to the one or plurality of words that have been specified.

Control unit 115 (read unit 115b) further stores in block state storage unit 107b block state information indicating that data that is read from memory 3 are stored in one or a plurality of words to which data from CPU 2 have not been written in the block.

In this case, only data that must be stored in data array 103 can be written to data array 103, and the fact that this writing has been carried out can be stored in block state storage unit 107b.

The present exemplary embodiment can further be applied for the purpose of a cache memory of parallel computers.

An example of the effect of the present invention is the enabling the avoidance of unnecessary memory accesses arising from false sharing in a parallel computer.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

An example 1 describes a cache memory system that is individually connected to each of a plurality of arithmetic units that access a shared memory to carry out parallel processing, said cache memory system comprising:
a data array that has a plurality of blocks that are composed of a plurality of words;
storage means for, with respect to a block, which stores data in at least one of said words, among said plurality of blocks, storing an address group of said shared memory that is placed in correspondence with that block;
write means for, when an address from said arithmetic unit is not in said storage means at the time of writing of data from the arithmetic unit, allocating any of said plurality of blocks as a block for writing, placing any word in that block for writing in correspondence with the address, and writing the data from said arithmetic unit to the word;
word state storage means for storing word state information for specifying a word, into which the data from said arithmetic unit have been written, in association with an address that has been placed in correspondence with the word; and
data transfer means for, when said block for writing is replaced with a different block, referring to said word state storage means, specifying one or a plurality of words, into which said data have been written by said arithmetic unit, within said block for writing, and performing write-back of data in the one or plurality of specified words to a corresponding block in said shared memory.

An example 2 describes the cache memory system according to the example 1, further comprising read means for, when said word state storage means stores said word state information that corresponds to an address from said arithmetic unit at the time of reading of data by the arithmetic unit, reading data from a word specified in the word state information.

An example 3 describes the cache memory system according to the example 2, further comprising:
block state storage means for storing, for each address group that corresponds to said blocks, block state information indicating whether data that is read from said shared memory are stored or not in a word in the block to which data from said arithmetic unit have not been written;
   and
determination means for, upon receiving an address from said arithmetic unit at the time of reading of data by the arithmetic unit, referring to said word state storage means and said block state storage means to determine whether a cache hit or a cache miss has occurred for that address.

An example 4 describes the cache memory system according to the example 3, wherein said read means, upon occurrence of a cache miss at the time of reading of data by said arithmetic unit, reads data in a block, which corresponds to the address from the arithmetic unit, from said shared memory, refers to said word state storage means to specify one or a plurality of words, to which data have not been written, in that block of said data array, writes data of the block, which have been read from said shared memory, to only the one or the plurality of words that have been specified, and stores in said block state storage means said block state information that indicates that data read from said shared memory are stored in one or a plurality of words in the block to which data have not been written from said arithmetic unit.

An example 5 describes a cache memory control method that is carried out by a cache memory system that is individually connected to each of a plurality of arithmetic units that access a shared memory to carry out parallel processing, said cache memory system including a data array having a plurality of blocks composed of a plurality of words; the cache memory control method comprising:
storing, with respect to a block, which stores data in at least one of said words, among said plurality of blocks, an address group of said shared memory, which has been placed in correspondence with the block, in a storage means;
when an address from said arithmetic unit is not within said storage means at the time of performing writing of data from the arithmetic unit, allocating any of said plurality of blocks as a block for writing, placing any of the words in the block for writing in correspondence with the address, and writing the data from the arithmetic unit to that word;
storing word state information for specifying a word, to which the data from said arithmetic unit have been written, in association with an address, which has been placed in correspondence with the word in a word state storage means; and
carrying out data transfer wherein, when said block for writing is replaced with a different block, referring to said word state storage means to specify one or a plurality of words, to which the data have been written, in said block for writing, and performing write-back of data in the one or plurality of specified words to a corresponding block in said shared memory.

An example 6 describes the cache memory control method according to the example 5, further comprising, when said word state storage means stores said word state information that corresponds to an address from said arithmetic unit at the time of reading of data by the arithmetic unit, reading data from a word that is specified in the word state information.

An example 7 describes the cache memory control method according to the example 6, further comprising:
for each address group that corresponds to said block, storing in a block state storage means block state information that indicates whether or not data that is read from said shared memory are stored in a word in the block in which data from said arithmetic unit have not been written;
   and
when an address has been received from said arithmetic unit at the time of reading of data by the arithmetic unit, referring to said word state storage means and said block state storage means to determine whether a cache hit or a cache miss has occurred for that address.

An example 8 describes the cache memory control method according to the example 7, further comprising: when said reading results in a cache miss at the time of reading of data by said arithmetic unit, reading data in a block, which corresponds to an address from the arithmetic unit, from said shared memory, referring to said word state storage means to specify one or a plurality of words, to which data have not been written, in the block of said data array, writing data of the block, which have been read from said shared memory, only to the one or the plurality of words that were specified, and storing in said block state storage means said block state information that indicates that data read from said shared memory are stored in one or a plurality of words in the block to which data from said arithmetic unit have not been written.

A further exemplary embodiment is summerised as follows.

A cache memory system, which is individually connected to each of a plurality of arithmetic units that access a shared memory to carry out parallel processing, includes: a data array that has a plurality of blocks that are composed of a plurality of words; a storage unit that, with respect to a block, which stores data in at least one of the words, among the plurality of blocks, stores an address group of the shared memory that is placed in correspondence with that block; a write unit that, when an address from said arithmetic unit is not in the storage unit at the time of writing of data from the arithmetic unit, allocates any of the plurality of blocks as a block for writing, places any word in that block for writing in correspondence with the address, and writes the data from the arithmetic unit to the word; a word state storage unit that stores word state information for specifying a word, into which the data from the arithmetic unit have been written, in association with an address that has been placed in correspondence with the word; and a data transfer unit that, when the block for writing is replaced with a different block, refers to the word state storage unit, specifies one or a plurality of words, into which the data have been written, within the block for writing, and performs write-back of data in the one or plurality of specified words to a corresponding block in the shared memory.

## Claims

1. A cache memory system that is individually connected to each of a plurality of arithmetic units that access a shared memory to carry out parallel processing, said cache memory system comprising:
a data array that has a plurality of blocks that are composed of a plurality of words;
storage means for, with respect to a block, which stores data in at least one of said words, among said plurality of blocks, storing an address group of said shared memory that is placed in correspondence with that block;
write means for, when an address from said arithmetic unit is not in said storage means at the time of writing of data from the arithmetic unit, allocating any of said plurality of blocks as a block for writing, placing any word in that block for writing in correspondence with the address, and writing the data from said arithmetic unit to the word;
word state storage means for storing word state information for specifying a word, into which the data from said arithmetic unit have been written, in association with an address that has been placed in correspondence with the word; and
data transfer means for, when said block for writing is replaced with a different block, referring to said word state storage means, specifying one or a plurality of words, into which said data have been written by said arithmetic unit, within said block for writing, and performing write-back of data in the one or plurality of specified words to a corresponding block in said shared memory.

2. The cache memory system according to claim 1, further comprising read means for, when said word state storage means stores said word state information that corresponds to an address from said arithmetic unit at the time of reading of data by the arithmetic unit, reading data from a word specified in the word state information.

3. The cache memory system according to claim 2, further comprising:
block state storage means for storing, for each address group that corresponds to said blocks, block state information indicating whether data that is read from said shared memory are stored or not in a word in the block to which data from said arithmetic unit have not been written; and
determination means for, upon receiving an address from said arithmetic unit at the time of reading of data by the arithmetic unit, referring to said word state storage means and said block state storage means to determine whether a cache hit or a cache miss has occurred for that address.

4. The cache memory system according to claim 3, wherein said read means, upon occurrence of a cache miss at the time of reading of data by said arithmetic unit, reads data in a block, which corresponds to the address from the arithmetic unit, from said shared memory, refers to said word state storage means to specify one or a plurality of words, to which data have not been written, in that block of said data array, writes data of the block, which have been read from said shared memory, to only the one or the plurality of words that have been specified, and stores in said block state storage means said block state information that indicates that data read from said shared memory are stored in one or a plurality of words in the block to which data have not been written from said arithmetic unit.

5. A cache memory control method that is carried out by a cache memory system that is individually connected to each of a plurality of arithmetic units that access a shared memory to carry out parallel processing, said cache memory system including a data array having a plurality of blocks composed of a plurality of words; the cache memory control method comprising:
storing, with respect to a block, which stores data in at least one of said words, among said plurality of blocks, an address group of said shared memory, which has been placed in correspondence with the block, in a storage means;
when an address from said arithmetic unit is not within said storage means at the time of performing writing of data from the arithmetic unit, allocating any of said plurality of blocks as a block for writing, placing any of the words in the block for writing in correspondence with the address, and writing the data from the arithmetic unit to that word; storing word state information for specifying a word, to which the data from said arithmetic unit have been written, in association with an address, which has been placed in correspondence with the word in a word state storage means; and
carrying out data transfer wherein, when said block for writing is replaced with a different block, referring to said word state storage means to specify one or a plurality of words, to which the data have been written, in said block for writing, and performing write-back of data in the one or plurality of specified words to a corresponding block in said shared memory.

6. The cache memory control method according to claim 5, further comprising, when said word state storage means stores said word state information that corresponds to an address from said arithmetic unit at the time of reading of data by the arithmetic unit, reading data from a word that is specified in the word state information.

7. The cache memory control method according to claim 6, further comprising:
for each address group that corresponds to said block, storing in a block state storage means block state information that indicates whether or not data that is read from said shared memory are stored in a word in the block in which data from said arithmetic unit have not been written; and
when an address has been received from said arithmetic unit at the time of reading of data by the arithmetic unit, referring to said word state storage means and said block state storage means to determine whether a cache hit or a cache miss has occurred for that address.

8. The cache memory control method according to claim 7, further comprising: when said reading results in a cache miss at the time of reading of data by said arithmetic unit, reading data in a block, which corresponds to an address from the arithmetic unit, from said shared memory, referring to said word state storage means to specify one or a plurality of words, to which data have not been written, in the block of said data array, writing data of the block, which have been read from said shared memory, only to the one or the plurality of words that were specified, and storing in said block state storage means said block state information that indicates that data read from said shared memory are stored in one or a plurality of words in the block to which data from said arithmetic unit have not been written.
